# EUROPEAN PATENT APPLICATION

(11) **EP 0 542 569 A1**
(43) Date of publication of application: **19.05.1993**
(21) Application number: 92310391.5
(22) Date of filing: 13.11.1992
(51) Int. Cl.: B60T 17/08, F16D 65/32

(54) **Fluid pressure operable actuators**

(30) Priority: 15.11.1991 GB 9124350
(71) Applicant: Knorr-Bremse Systems for Commercial Vehicles Limited, Kingswood, Bristol BS15 2NL (GB)
(72) Inventor: Bowden, Paul Anthony, Warmley, Bristol BS15 5XQ (GB); Fisher, Paul Anthony, Hanham, Bristol, BS15 3JW (GB)
(74) Representative: Hogg, Jeffery Keith

(57) **Abstract**

In a fluid pressure operable diaphragm brake chamber a flexible membrane (20) provides a protective barrier between a vented region and the working peripheral interface of the actuator diaphragm (10) and a push-plate (11) thereby avoiding deleterious contaminants acting therebetween.

## Description

This invention relates to fluid pressure operable actuators and relates especially but not exclusively to compressed air operable fluid pressure operable brake actuators which employ flexible diaphragms.

A typical vehicle brake actuator, often referred to as a brake chamber comprises a vented non-pressure plate normally mounted on an axle of the vehicle close to the brake mechanism to be operated thereby. A fluid pressure responsive dish-shaped diaphragm has a peripheral bead which is clamped between the periphery of the non-pressure plate and a pressure plate to form a pressure chamber to which compressed air is applied via an input port. The diaphragm normally abuts a smooth steel push plate carrying the output rod of the actuator which extends outwardly of the non-pressure plate and has a screw-threaded end for connection to a brake mechanism.

Since the non-pressure plate is vented and contains between itself and the diaphragm a volume which varies at each brake application there is a tendency for contaminants to be drawn into the actuator. Such contaminants can have an abrading and life reducing effect upon the diaphragm by acting between the diaphragm and the periphery of the pressure plate. It is therefore an object of the invention to provide a fluid pressure operable actuator in which such shortcoming is reduced.

According to the present invention there is provided a fluid pressure operable diaphragm actuator comprising a housing and a pressure responsive diaphragm fixed at its periphery in said housing between a vented region and a pressurable region and having a central area which bears against a push-plate to apply force via an output member when fluid pressure is applied to said pressurable region and characterised by a flexible protecting membrane between which and the diaphragm the periphery of said push-plate is enclosed.

In one embodiment of the invention said flexible protecting membrane is provided by a dish-shaped plastic membrane clamped at its periphery between the periphery of the diaphragm and a non-pressure plate and attached to said push-plate radially normally of the periphery thereof on the same side as said output member.

In order that the invention may be more clearly understood and readily carried into effect the same will be further described by way of an example with reference to a combined service brake actuator and spring brake actuator as shown in the accompanying drawing.

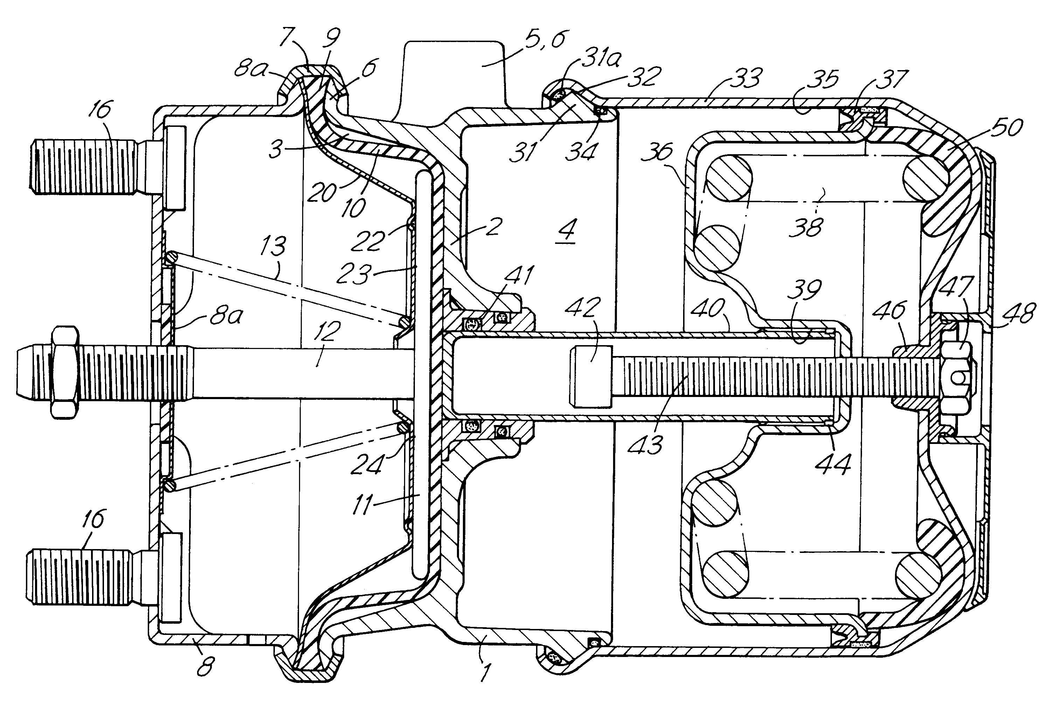

Referring to Fig. 1 of the drawings the combined compressed air operable service brake actuator and spring brake actuator comprises a middle body casting denoted by reference 1. Such casting is formed of aluminium by pressure die casting and provides a dividing wall 2 between a pressure chamber 3 of the service brake portion and a pressure chamber 4 of the spring brake portion. These chambers communicate via respective passages (not shown) with respective input ports denoted at 5, 6 formed on the outside of the casting.

On the left hand end of the casting 1, as seen in the drawing, there is formed a peripheral lip portion 6 to receive a pressed steel clamping ring to clamp the peripheral bead 9 of a dish-shaped diaphragm 10 between lip 6 and a corresponding lip 8a of a non-pressure portion 8 of the service actuator portion which may be a steel pressing. The central area of diaphragm 10 acts against a push-plate 11 carrying the screw-threaded actuator output rod. The push-plate 11 is urged towards the normal rest condition, as shown, by means of a light conical return spring 13 captive between the push-plate and the non-pressure portion of the actuator body, the actuator rod extending outwardly through a central aperture 14 thereof for connection to a brake mechanism of a vehicle. The wider end of the conical spring 14 is located by means of an annular locating plate 8a positioned within the non-pressure portion between the heads of mounting studs 16 which are welded in positions projecting through respective apertures of the non-pressure plate 8 for mounting the actuator in known manner to the axle assembly of a vehicle.

In accordance with the invention and having regard for the possibility that the vented region to the left of the diaphragm is open to a hostile environment the pressure plate 11 and diaphragm 10 assembly is provided with a protective annular dish-shaped moulded flexible membrane 20 the outer periphery 21 of which is trapped with the bead 9 of the diaphragm between the lip portions 8a and 6 of the non-pressure plate 8 and the pressure plate 10. The inner periphery 22 of the membrane is formed with a small bead which is trapped on the push-plate 11 by a suitably located annular plate 23 which also serves to locate the smaller end of the spring 13. Optionally, the plate 23 is located by spot welding to the push plate 11 at 24.

In an alternative, the membrane 20 may be formed by integrally moulding same with the bead 21 of the main service diaphragm.

On the right hand end of the middle casting 1 as seen in the drawing there is a further peripheral lip portion 31 to retain a rolled end 32 of a pressed steel cylinder 33 of the spring brake actuator portion. The rolled end 32 and lip 31 trap a retainer ring 31a in known manner, an annular seal 34 being provided between the casting 1 and the cylinder 33. Axially sealingly slideable in the bore 35 of cylinder 33 there is provided a piston 36 with an annular seal and piston guide assembly 37. A power spring 38 is retained under compression between the piston 36 and a spring support member 50 at the right hand end of the cylinder 33, the spring 38 being shown in a fully compressed condition as it is in use with full pressure applied to the chamber 4. The piston 36 is formed with a central recess 39 which accommodates an annular seal 44 and a screwed-in tubular spring actuator output member 40 which extends through a axial seal arrangement 41 in the central wall 2 to abut the right hand side of diaphragm 10. The output member 40 is closed at its outer end but is tubular to accommodate and enclose the head 42 of a wind-off bolt 43. The wind-off bolt, which is normally in the position shown, is carried in a threaded member 46 captive in the right hand end wall of the cylinder 33 and is provided with a keyed-on nut 47. A snap-on end cover 48 has an aperture which affords suitable access to the nut 47 by a wind-off key or box-spanner.

The operation of the combined service brake actuator and spring brake actuator is conventional. During normal running of the vehicle to which the actuator is fitted the chamber 4 is maintained at above a predetermined pressure value via a respective input port and the piston 36 is thereby held in the position shown with the spring 38 fully compressed. The service diaphragm 10 also rests in a rearward position as shown the pressure being contained by the seal assembly 41. In the event of a service brake application being required a graduated pressure is applied to chamber 3 via the other respective input port and the diaphragm thereby drives the output rod 12 outwards to apply the brakes. Release occurs when the air is released. In the event of an emergency or secondary braking by the spring brake actuator, air pressure is released from chamber 4 usually by operation of a drivers' hand-control valve and after the pressure has fallen below the predetermined hold-off pressure the force of the spring is applied gradually or fully to the output rod 40. Rod 40 acts on the right hand side of the diaphragm 10 and results in a brake application via rod 12. This is releasable either by restoring the hold-off pressure in chamber 4 or by manually operating the wind-off mechanism provided by bolt 43. During forward and rearward movement of the output rod 12, environmental air is drawn into and out of the vented non-pressure plate 8 but by virtue of the membrane 20, such air and contaminants carried thereby are prevented from reaching the vulnerable interfaces of edge parts of the push plate and the diaphragm 10.

## Claims

1. A fluid pressure operable diaphragm actuator comprising a housing (1,8) and a pressure responsive diaphragm (10) fixed at its periphery (9) in said housing between a vented region and a pressurable region said diaphragm having a central area ( ) which bears against a face of a push-plate (11) to apply a force via an output member (12) when fluid pressure is applied to said pressurable region characterised in that a protective barrier (20) is provided between which and the diaphragm (10) the periphery (11a) of said push-plate (11) is enclosed.

2. A fluid pressure operable actuator as claimed in claim 1, characterised in that said protective barrier comprises a protective membrane (20).

3. A fluid pressure operable actuator as claimed in claim 2, characterised in that said protective membrane is an annular dish-shaped membrane membrane has an outer periphery (21) clamped retained with the periphery (9) of said diaphragm.

4. A fluid pressure operable actuator as claimed in claim 2 or 3, characterised in that said protective membrane has an inner periphery attached to the other face of the push plate (11).

5. A fluid pressure operable actuator as claimed in claim 4 characterised in that the inner periphery of said protective membrane is attached by means of an annular plate (23).

6. A fluid pressure operable actuator as claimed in claim 5 said annular plate serving to locate one end of a push-plate return spring (13).
